# EUROPÄISCHE PATENTANMELDUNG

(11) **EP 1 564 063 A1**
(43) Veröffentlichungstag der Anmeldung: **17.08.2005**
(21) Anmeldenummer: 05002761.4
(22) Anmeldetag: 10.02.2005
(51) Int. Cl.: B60L 5/20

(54) **Kontinuierliche Herstellung von Schleifleisten aus Kohlenstoff mit einem geringen Anteil an dünnen metallischen Leitern**

(30) Priorität: 10.02.2004 DE 102004006589
(71) Anmelder: SGL CARBON AG, 65203 Wiesbaden (DE)
(72) Erfinder: Vesper, Wolfgang, Dr., 53115 Bonn (DE); Fischer, Ludger, Dr., 53343 Wachtberg (DE); Lotze, Gerd, Dr.-Ing., 01219 Dresden (DE); Kostmann, Chris, Dipl.-Ing., 01796 Pirna (DE)

(57) **Zusammenfassung**

Gegenstand der Erfindung ist ein Verfahren zur kontinuierlichen Herstellung eines Materialverbundes und einer daraus herzustellenden Schleifleiste bestehend aus einer Matrix von gebranntem Kohlenstoff mit wärmebehandeltem Binder und aus lagenweise darin enthaltenen dünnen metallischen Leitern. Der Materialverbund hat eine Dichte von kleiner oder gleich 2,3g/cm³ und weist einen parallel zu den Lagen der dünnen metallischen Leiter gemessenen mittleren spezifischen elektrischen Widerstand von kleiner oder gleich 3µΩm auf. Ein so charakterisierter Materialverbund wird mittels folgender Verfahrensschritte hergestellt:
- Mischen der trockenen Kohlenstoffkomponenten und der Additive mit kohlenwasserstoffhaltigem Bindemittel,
- kontinuierliches Walz-Kompaktieren des Materialverbundes aus grünem Kohlenstoffmaterial und dünnem metallischen Leiter
- Brennen des zunächst grünen Formkörpers unter dem Schutzgas Wasserstoff und
- Bearbeiten des so erhaltenen Materialverbundes zu Schleifleisten, die die dünnen metallischen Leiter in der gewünschten Orientierung enthalten.

So hergestellte Schleifleisten dienen der gleitenden Stromabnahme zwecks Betrieb von Fahrzeugen mit Elektromotoren.

## Beschreibung

Gegenstand der Erfindung ist ein Verfahren zur kontinuierlichen Herstellung eines Materialverbundes und einer daraus herzustellenden Schleifleiste bestehend aus einer Matrix von gebranntem Kohlenstoff mit wärmebehandeltem Binder und aus lagenweise darin enthaltenen dünnen metallischen Leitern mit einer Dichte von kleiner oder gleich 2,3g/cm³ und mit einem parallel zu den Lagen der dünnen metallischen Leiter gemessenen mittleren spezifischen elektrischen Widerstand von kleiner oder gleich 3µΩm für die gleitende Stromabnahme mit Hilfe von Schleifleisten zum Betrieb von Fahrzeugen mit Elektromotoren mittels der bekannten Verfahrensschritte
- Mischen der trockenen Kohlenstoffkomponenten und der Additive mit kohlenwasserstoffhaltigem Bindemittel,
- Brennen des zunächst grünen Formkörpers unter dem Schutzgas Wasserstoff und
- Bearbeiten des so erhaltenen Materialverbundes zu Schleifleisten, die die dünnen metallischen Leiter in der gewünschten Orientierung enthalten.

Die Herstellung von carbonisierten oder graphitierten Kohlenstciffkörpem ist eine inzwischen seit über einhundert Jahren beherrschte Technik, die im industriellen Maßstab großtechnisch angewandt wird und deshalb in vielen Punkten ausgefeilt und bezüglich der Kosten optimiert ist. Eine der Beschreibungen dieser Technik findet man in dem kleinen Band FEINKORNGRAPHITE von A. KINDLER im verlag moderne industrie, 1995 in der Reihe "Die Bibliothek der Technik, Band 119". Die Beschreibung der Feinkorngraphite hier zu zitieren ist deshalb zweckmäßig, weil Schleifleisten aus den relativ festen Feinkomgraphiten hergestellt werden.

Schienengebundene, mit Elektromotoren betriebene Fahrzeuge erhalten den notwendigen Strom meist über eine Schleifleiste, die auf einem Tragelement eines Pantographen auf dem Fahrzeug montiert ist. Die Schleifleiste berührt die ortsfeste, in Fahrtrichtung angeordnete Stromzuführung - meist ein Fahrdraht -, und gleitet beim Fahren des Fahrzeugs an der Stromzuführung bzw. am Fahrdraht entlang. Bei Schienenfahrzeugen kann man nicht davon ausgehen, dass der Abstand zwischen Schiene und Fahrdraht auf der gesamten Fahrstrecke konstant ist. Geringe Abstandsänderungen zwischen Schiene und Fahrdraht werden während der Fahrt durch den Pantographen ausgeglichen.

In der folgenden beiden Absätzen wird erläutert, warum es wichtig ist, eine Dichte von kleiner oder gleich 2,3g/cm³ zu erreichen.
Bei geringen Fahrzeuggeschwindigkeiten ist die Geschwindigkeit der Ausgleichsbewegung des Pantographen schnell genug, um die Schleifleiste stets an den Fahrdraht anzudrücken und so den Stromübergang zu ermöglichen. Dabei werden die senkrecht zur Längsachse des Fahrdrahtes auf diesen ausgeübten Kräfte im Wesentlichen durch die im Pantographen eingestellten Spannkräfte bestimmt.
Bei hohen Fahrzeuggeschwindigkeiten treten zu den aus den Spannkräften des Pantographen resultierenden Kräften weitere hinzu. Diese resultieren zu einem erheblichen Anteil aus der Massenträgheit der Bauteile des Pantographen. Tragelement - häufig auch als "Träger" oder "Schleifleistenträger" bezeichnet - und Schleifleiste tendieren wegen ihrer Trägheit, in konstantem Abstand zur Schiene zu verharren.

Ändert sich beim Fahren der Abstand zwischen Fahrdraht und Schiene abrupt, so erhält die Schleifleiste im Falle einer Abstandsvermänderung eine schlagartige Belastung und im Falle einer Abstandsvergrößerung kann sogar kurzfristig der Kontakt zwischen Fahrdraht und Schleifleiste verloren gehen, weil die Ausgleichsbewegung des Pantographen mit Träger und Schleifleiste nicht schnell genug ist. Beide Effekte fallen schwächer aus, wenn die Trägheiten von Träger und Schleifleiste klein sind. Daher werden kleine Massen von Träger und Schleifleiste gewünscht.
Gemessen an der Dichte gängiger, elektrisch gut leitfähiger Metalle ist die Dichte der Kohlenstoffe von Schleifleisten gering. Um jedoch eine ausreichende elektrische Leitfähigkeit beziehungsweise einen niedrigen elektrischen Widerstand dieser Kohlenstoffe zu erhalten, benötigen diese Kohlenstoffe Metalle als Additiv. Meist werden die Metalle in Form einer Metallimprägnierung des porösen Kohlenstoffes zugegeben, womit diese Werkstoffverbunde eine Dichte aufweisen, die über der von nicht mit Metall imprägnierten Kohlenstoffen liegt. Damit ist die Trägheit solcher Schleifleisten höher als die Trägheit von nur aus Kohlenstoff bestehenden Schleifleisten.
Neben der Massenträgheit und neben dem niedrigen elektrischen Widerstand ist die Erwärmung der Schleifleiste im Betrieb eine zu beachtende Größe. Die Schleifleiste darf sich bei hohen Strömen nicht übermäßig erwärmen. Andernfalls werden die Schleifleiste selber, der Fahrdraht oder die Klebung, mit der die Schleifleiste in vielen Fällen am Träger befestigt ist, geschädigt.

Die Begriffe im folgenden Text sind so zu verstehen:
- Unter einer *grünen Mischung* versteht man in der Kohlenstofftechnik ein Gemisch aus Trockenstoffen aus der Gruppe der Kokse, des Elektrographits, des Naturgraphits, der Ruße u. a. mit den gewünschten Kornbändern, der kohlenwasserstoffhaltigen Bindemittel und der Additive, Wenn Peche als Bindemittel eingesetzt werden, findet das Mischen bei Temperaturen oberhalb des Erweichungspunktes der Peche statt. Nach dem Mischen und Abkühlen auf Raumtemperatur liegt die *grüne Mischung* zunächst in nicht verarbeitbaren Schollen vor. Um diese in eine verarbeitungs- und dosierfähige Form zu bringen, werden die Schollen in einer *Sekundärmahlung* zu einer rieselfähigen Körnung mit geeigneten Korngrößen zerkleinert.
- Die rieselfähige grüne Mischung wird zusammen mit lagenweise eingeführten dünnen metallischen Leitern als *Vorprodukt* für das Walz-Kompaktieren eingesetzt.
- Beim *Walz-Kompaktieren* wird die grüne Mischung zusammen mit dünnen metallischen Leitern zwischen den Walzen eines Walzenpaares verdichtet. Werden die Vorprodukte dem Walzenpaar in geeigneter Weise zugeführt, so entsteht kontinuierlich ein Band, dessen Profil von den Abmessungen des Walzenstuhls bestimmt wird.
- Der Widerstand des Materialverbundes wird in Anlehnung an *DIN IEC 413, Abschnitt 402* aus den folgenden Angaben errechnet. An den carbonisierten Proben werden die durchfließende Stromstärke, der Spannungsabfall, die Messlänge und der Querschnitt gemessen.
   Bei der Ermittlung dieser Daten wird darauf geachtet, dass Stromstärke und Spannungsabfall nicht nur durch eine Komponente des Materialverbundes - wie etwa die dünnen metallischen Leiter - bestimmt werden.
- Bei korrekter Ausführung der Messungen und richtiger Ermittlung des Widerstandes wird ein zutreffender Widerstand für den Materialverbund aus Kohlenstoffmatrix und darin enthaltenen dünnen elektrischen Leitern bestimmt. Dieser Wert wird als *"mittlerer spezifischer elektrischer Widerstand"* bezeichnet.
- Da in Richtung senkrecht zu den Lagen der dünnen elektrischen Leiter durch diese kaum ein erhöhter Strom fließt, kann an dem Materialverbund in dieser Richtung nur der spezifische elektrische Widerstand der Matrix des gebrannten Kohlenstoffes mit wärmebehandeltem Binder festgestellt werden. Der gewünschte niedrige "mittlere spezifische elektrische Widerstand" wird nur parallel zu den Lagen der dünnen elektrischen Leiter festgestellt. Damit ist auch eine Anisotropie des Werkstoffverbundes festgestellt.

In der japanischen Schrift JP 1270571 (1989) wird ein Schleifleistenwerkstoff mit niedrigem spezifischem elektrischem Widerstand dargestellt, Der niedrige spezifische elektrische Widerstand wird durch die Einlagerung von Kupferdrahtgeweben in die Kohlenstoffmatrix und durch die Imprägnierung eines in der Kohlenstoffmatrix vorhandenen Porensystems mit einer niedrig schmelzenden Legierung aus z. B. Kupfer-Zinn erreicht. Damit wird das in dieser Schrift formulierte Ziel erreicht, einen Schleifleistenwerkstoff mit guten Selbstschmiereigenschaften zu erhalten. Durch die Imprägnierung mit Kupfer-Zinn erhält dieser Werkstoff einen relativ hohen Metallgehalt und die Dichte dieses Schleifleistenwerkstoffes beträgt mindestens 3,2 g/cm³. Es ist daher nicht das Ziel der japanischen Erfinder, einen Werkstoff mit niedriger Dichte und damit eine Schleifleiste mit niedriger Massenträgheit zu erreichen.

In den japanischen Schriften JP 4207903 und JP 4207904 werden Schleifleistenwerkstoffe mit niedrigen spezifischen elektrischen Widerständen und zugleich hohen Bruchzähigkeiten dargestellt. Die hohen Bruchzähigkeiten werden durch die Zugabe metallischer Fasern mit einem Anteil von 5 bis 60Vol.% der Mischung aus Kohlenstoff und Fasern erreicht. Vorzugsweise liegt der Faservolumenanteil bei 10 bis 45Vol.-%. Im Falle der Schrift JP 4207903 werden die metallischen Fasern in einem zusätzlichen Wärmebehandlungsprozess abgeschreckt.
Im Gegensatz zur vorliegenden Erfindung handelt es sich bei beiden Schriften um metallische Kurzfasern, nicht um Endlos-Fasern. Dies hat zur Folge, dass ein relativ hoher Faserauteil benötigt wird, um die Kontakte der Fasern untereinander sicher zu stellen und auf diese Weise Strompfade mit niedrigem elektrischem Widerstand zu erreichen. Dies bedeutet einen hohen Metallanteil und damit zugleich eine relativ hohe Dichte, die Kohlenstoff-Werkstoffen mit der erfindungsgemäßen Dichte entgegensteht.

In der japanischen Schrift JP 4280865 wird ein Schleifleistenwerkstoff mit sehr guten Schlagzähigkeiten und Gleiteigenschaften beschrieben. Der Schleifleistenwerkstoff besteht aus Kohlenstoffmaterial und Metallfasern und/oder Metallpulver. Dabei sind die Metallfasern - auch in verschiedener textiler Aufmachung - asymmetrisch in der Schleifleiste angeordnet. Wenn die Schleifleiste auf dem Tragelement des Pantographen montiert ist, sind die Metallfasern zu der dem Fahrdraht abgewandten Seite orientiert beziehungsweise zu der dem Träger zugewandten Seite orientiert. Der Gehalt an Metallfasern ist hoch. An einer Stelle der Schrift wird er mit 30Vol.-% angegeben, Entsprechend hoch fällt die Dichte dieser Werkstoffverbunde aus. In Tabelle 1 werden Werte von 3,8 bis 4,0 g/cm³ angegeben, Schleifleisten dieser Art gleiten gut, sie sind auch schlagzäh, aber sie haben eine vergleichsweise hohe Dichte, besitzen damit eine hohe Massenträgheit und weisen keinen besonders niedrigen spezifischen elektrischen Widerstand auf.

Der der vorliegenden Erfindung nächstliegende Stand der Technik wird offenbar in der japanischen Schrift JP 2000-037001 beschrieben, Ein kohlenstoffreiches Material für die gleitende Stromabnahme enthält schichtförmig metallische Leiter. Die metallischen Leiter sind z. B. Faserbündel, die durch textile Prozesse - wie z. B. Weben - in flächige Gebilde umgesetzt werden. Innerhalb einer Ebene der metallischen Leiter fließt der elektrische Strom praktisch ungehindert. Von einer solchen Ebene zur nächsten ist der Stromfluss jedoch durch den relativ hohen spezifischen elektrischen Widerstand des Matrixkohlenstoffes gering. Um diese Situation zu verbessern, enthält das kohlenstoffreiche Material metallische Stifte, die die Ebenen der metallischen Leiter im Wesentlichen senkrecht durchsetzen und elektrisch miteinander verbinden. Obwohl mit den schichtförmigen, metallischen Leitern relativ wenig Metall im Gesamtwerkstoff enthalten ist, wird in JP 2000-037001 kein Mindest-Metallgehalt des Werkstoffes definiert und beansprucht, um eine gute Strom-leitung zu sichern. Es wird auch keine Obergrenze für die Dichte des Gesamtwerkstoffes und kein höchster spezifischer elektrischer Widerstand definiert und beansprucht. Es wird auch keine in allen Richtungen durchgängige Kohlenstoffmatrix des fertigen Werkstoffes bean-sprucht. Diese durchgängige Kohlenstoffmatrix ist dagegen ein Merkmal des erfindungs-gemäßen Materialverbundes. Daher besteht beim Brennen dieses Verbundes nicht das Risiko der Delamination.

Die japanischen Schrift JP 2000-037001 und die deutsche Patentanmeldung mit dem Aktenzeichen 103 28 546.6 beschreiben diskontinuierliche Techniken zur Herstellung solcher Werkstoffe. Dabei werden nach 103 28 546.6 folgende Herstellungsschritte durchgeführt:
a) Abwechselndes Einbringen von Lagen aus Körnung von Kohlenstoffpaitikeln mit wärmebehandeltem Binder und mindestens zwei Lagen mit dünnen metallischen Leitern in eine Pressform,
b) Verpressen der in die Pressform eingebrachten Lagen,
c) Entnehmen des verdichteten, grünen Formkörpers aus der Pressform,
d) Brennen des zunächst grünen Formkörpers unter dem Schutzgas Wasserstoff,
e) Zerschneiden des aus dem erfindungsgemäßen Materialverbund bestehenden gebrannten Formkörpers in lange Quader, die die dünnen metallischen Leiter in der gewünschten Orientierung enthalten und die auf die gewünschten Endmaße der Schleifleisten bearbeitet werden.

Ein kontinuierliches Verfahren wird nicht in Details beschrieben.

Die Aufgabe der dieser Patentanmeldung zu Grunde liegenden Erfindung war es deshalb, ein Verfahren zur kontinuierlichen Herstellung eines Materialverbundes bestehend aus einer Matrix von gebranntem Kohlenstoff mit wärmebehandeltem Binder und aus lagenweise darin enthaltenen dünnen metallischen Leitern und einer daraus herzustellenden Schleifleiste zu schaffen, das einerseits ein Material mit einer Dichte von kleiner oder gleich 2,3g/cm³ und einem parallel zu den Lagen der dünnen metallischen Leiter gemessenen mittleren spezifischen elektrischen Widerstand von kleiner oder gleich 3µΩm gewährleistet und andererseits eine kontinuierliche Herstellung dieses Materialverbundes gestattet.
Die Randbedingungen zu dieser Aufgabe sind, dass die gleitende Stromabnahme zum Betrieb von Fahrzeugen mit Elektromotoren mit Hilfe von Schleifleisten erfolgt und dass die Schleifleisten mittels der bekannten Verfahrensschritte
- Mischen der trockenen Kohlenstoffkomponenten und der Additive mit kohlenwasserstoffhaltigem Bindemittel,
- Brennen des zunächst grünen Formkörpers unter dem Schutzgas Wasserstoff und
- Bearbeiten des so erhaltenen Materialverbundes zu Schleifleisten, die die dünnen metallischen Leiter in der gewünschten Orientierung enthalten, hergestellt werden.

Die kontinuierliche Herstellung eines verdichteten, endlosen Profils eines Materialverbundes aus grünem Kohlenstoffmaterial und dünnem metallischem Leiter hat den Vorteil, dass man nicht wie beim Gesenkpressen in der Bauteillänge begrenzt ist oder wie beim Extrudieren eine homogene Materialstzuktur erhält.
Die Fertigung von Schleifleisten in der auf den Lokomotiven eingesetzten Länge erforderte ungewöhnlich starke und teure Gesenkpressen mit langen Gesenken, um die zugehörigen grünen Körper der Schleifleisten zu pressen, Das Extrudieren von grünen Körpern für Schleifleisten der im Oberbegriff des Anspruchs 1 genannten Art ist nicht möglich. Im extrudierten Profil wären die dünnen metallischen Leiter nicht in der gewünschten geordneten Weise zu erhalten.

Zur Lösung der Aufgabe wird nach dem Verfahrensschritt Mischen und vor dem Verfahrensschritt Brennen mit einem Verfahrensschritt Walz-Kompaktieren ein verdichtetes Profil eines Materialverbundes aus grünem Kohlenstoffmaterial und dünnem metallischem Leiter kontinuierlich erzeugt. Im gebrannten Zustand hat dieser Materialverbund aus einer Koblenstoffmatrix und aus lagenweise enthaltenen dünnen metallischen Leitern die geforderte Dichte und den geforderten mittleren spezifischen elektrischen Widerstand.

Die Lösung der Aufgabe wird durch die kennzeichnenden Teile der Ansprüche zwei bis achtzehn in vorteilhafter Weise ausgestaltet.

Das Walz-Kompaktieren eignet sich für verschiedene Arbeitsschritte: Zum einen kann die rieselfähige grüne Mischung kontinuierlich zu Bändern verdichtet werden, zum anderen können zwei oder mehrere solcher Bänder zu einem einheitlichen Formkörper zusammengepresst werden.
Eine wesentliche Voraussetzung für das erste Verdichten zu einem Band ist, dass die grüne Mischung in rieselfähiger Form vorliegt. Der Gehalt an kohlenwasserstoffhaltigem Bindemittel der grünen Mischung beträgt 10 bis 50Gew.-%. Die kohlenwasserstoffhaltigen Bindemittel sind die in der Kohlenstofftechnik gängigen Peche oder Kunstharze.
Für das Walz-Kompalctieren wird eine rieselfähige grüne Mischung mit einer Komverteilung von 10 µm bis 500 µm eingesetzt.

Gleichzeitig mit der rieselfähigen grünen Mischung wird eine Lage aus dünnem metallischen Leiter in das verdichtende Walzenpaar eingezogen. Die Lage aus dünnem metallischen Leiter wird so beim Walz-Kompaktieren eingesetzt, dass sie entweder auf beiden Seiten etwa in gleicher Stärke von der zunächst rieselfähigen, dann verdichteten grünen Mischung bedeckt ist oder die Lage wird so eingesetzt, dass sie nur einseitig von der zunächst rieselfihigen, dann verdichteten grünen Mischung bedeckt ist.

Für das Walz-Kompaktieren werden vergleichsweise dünne und flexible metallische Leiter in Form von Lagen aus Drähten, Litzen oder Bändern mit Dicken der einzelnen Filamente von weniger als 0,4 mm eingesetzt. Metallische Leiter sind Kupfer oder Kupferlegierungen. Innerhalb der Lage des metallischen Leiters sind die Drähte, Litzen oder Bänder entweder im Wesentlichen uni-direktional einzeln oder scharweise, jeweils mit Abständen zueinander angeordnet, oder im Wesentlichen multidirektional angeordnet. Letzteres entspricht bezüglich der Leiterorientie-rung einem zwei- oder mehrachsigen Gewebe. Auch solche mehrachsigen Gewebe eignen sich als Lage aus dünnen metallischen Leitern in den erfindungsgemäßen Kohlenstoffbändem. Allerdings dürfen diese Gewebe keine geschlossene Schicht bilden. Vielmehr sind durchbrochene Gittergewebe einzusetzen. Werden keine Gittergewebe sondern geschlossene Gewebe verwendet, stellen letztere eine den Zusammenhalt des Kohlenstoff-Profils oder
Bandes stark störende Inhomogenität dar. Diese ist meist Ursache für Delaminationen, die durch mechanischen Schock oder durch deutliche Differenzen in den thermischen Ausdehnungskoeffizienten - wirksam z. B. beim Brennen - ausgelöst werden.

Die vorgenannten textilen Formen des dünnen metallischen Leiters werden in einer Lage so eingesetzt, dass mindestens 40% der Fläche dieser Lage aus der verdichteten grünen Mischung bestehen.

Beim kontinuierlichen Verwalzen zweier verdichteter, endloser Profile mit Lagen dünner metallischer Leiter, die gemäß Anspruch 8 nur einseitig von der zunächst rieselfähigen, dann verdichteten grünen Mischung bedeckt sind, ist verständlicher Weise auf Folgendes zu achten: Die Lagen dünner metallischer Leiter, die jeweils an der Oberfläche eines verdichteten Profils sind, werden nicht so angeordnet, dass sie übereinander liegen. Erstens haften die Lagen dünner metallischer Leiter nicht aneinander und zweitens würde die oben beschriebene stark störende Inhomogenität mit der Gefahr der Delamination entstehen.

Für das Walz-Kompaktieren der Vorprodukte wird mindestens ein Walzenpaar eingesetzt, welches einen definiert eingestellten Walzenspalt aufweist und aus zwei mit gleicher aber gegenläufiger Mantelgeschwindigkeit laufenden Walzen besteht. Die Achsen eines solchen Walzenpaares sind in einer horizontalen Ebene angeordnet. Das ist zweckmäßig, weil auf diese Weise die rieselfähige grüne Mischung in den Spalt des Walzenpaares hinein laufen kann. Die rieselfähige grüne Mischung und die dünnen metallischen Leiter - insgesamt die Vorprodukte - und das daraus verdichtete Profil des grünen Kohlenstoffmaterials oder des Materialverbundes werden kontinuierlich im Wesentlichen vertikal von oben nach unten gefördert.

Das verdichtete, endlose Profil eines grünen Kohlenstoffmaterials oder eines Materialverbundes mit dünnen metallischen Leitern weist einen solchen Zusammenhalt auf, dass es ohne Weiteres zu handhaben ist. Daher werden zwei oder mehrere solche verdichtete Profile zur weiteren Behandlung durch Walzenpaare geführt, deren Achsen in einer vertikalen Ebene angeordnet sind. Die verdichteten, endlosen Profile selbst werden übereinander gelegt bei Temperaturen von 20 bis 120°C im Wesentlichen horizontal im Walz-Kompaktieren verwalzt.

In einer Gesamtanlage werden mindestens zwei aus der rieselfähigen grünen Mischung und anderen Vorprodukten verdichtete Profile kontinuierlich zunächst im Wesentlichen in vertikaler Richtung von oben nach unten erzeugt und gefördert und nach Umlenken um 90° sowie einer Vorwärmung in einer Temperierkammer zusammengefasst und im Wesentlichen horizontal mit Hilfe eines Walzenpaares zu einem Formkörper verwalzt. Soll ein solcher Formkörper zu einer Schleifleiste verarbeitet werden, so enthält dieser Formkörper mindestens zwei Lagen dünner metallischer Leiter, wobei mindestens 40% der Fläche der die dünnen metallischen Leiter enthaltenden Lagen vom Kohlenstoffmaterial durchsetzt sind. Die Lagen der dünnen metallischen Leiter sind innerhalb des Materialverbundes im Wesentlichen parallel zueinander angeordnet.

Das Walz-Kompaktieren ist ein kontinuierliches Verfahren mit dem verdichtete Formkörper aus einem Materialverbund von grünem Kohlenstoff und dünnen metallischen Leitern hergestellt werden. Ein solcher Materialverbund enthält erfindungsgemäß weniger als 5Vol.-% Metalle.

### Beispiele

In einem ersten Ausführungsbeispiel wurden als Feststoffe 53Gew.-% Koks, 15Gew.-% Graphit und 7Gew.-% Ruß mit 25Gew.-% Bindemittel gemischt. Dabei lagen die Feststoffe in einer Körnung von unter 500µm vor und das Pech hatte einen Erweichungspunkt von 80°C nach Krämer-Samow. In einem ersten Mischprozess wurden die Bestandteile bei Raumtemperatur homogenisiert und anschließend in einem Schneckenextruder der Marke Bausano auf etwa 150°C erwärmt. Dabei verteilte sich das dann flüssige Pech auf die Oberflächen der Feststoffe; das heiße Gemisch wurde schließlich als Profil extrudiert. Das heiße Profil ließ man auf Raumtemperatur abkühlen, um es anschließend durch eine Sekundärmahlung auf eine mittlere Korngröße von 100µm zu bringen. Diese rieselfähige grüne Mischung war das Vorprodukt für das Walz-Kompaktieren von verdichteten Profilen oder Formkörpern. Unter den folgenden Bedingungen wurde verdichtet:
Die rieselfähige grüne Mischung wurde in einen Fülltrichter mit Verstelleinrichtung über einem Walzenpaar gegeben, dessen Walzen jeweils einen Durchmesser von 200mm hatten und dessen Walzenachsen in der horizontalen Ebene angeordnet waren. Die Mantelgeschwindigkeit der gegenläufigen Walzen betrug 2,0m/min. Das Verdichten der grünen Mischung im Walzenspalt erfolgte bei Raumtemperatur und das verdichtete Profil verlies kontinuierlich den Walzenspalt vertikal von oben nach unten. Der Walzenspalt wurde auf 1,50mm eingestellt.
Das Ergebnis des Walz-Kompaktierens war ein verdichtetes, endloses Profil aus grünem Kohlenstoff mit einer Dicke von 1,70mm.

In einem zweiten Ausführungsbeispiel wurde die gleiche rieselfähige grüne Mischung wie beim ersten Ausführungsbeispiel in den Fülltrichter mit Verstelleinrichtung über dem selben Walzenpaar gegeben und zusätzlich wurde eine Lage dünner metallischer Leiter durch die lose rieselfähige grüne Mischung im Fülltrichter mit Verstelleinrichtung bis in den Spalt des Walzenpaares geführt, wo grüne Mischung und metallische Leiter kontinuierlich zu einem Materialverbund in Form eines endlosen Profils verdichtet wurden. Das Walz-Kompaktieren erfolgte unter diesen Bedingungen:
Die Mantelgeschwindigkeit der gegenläufigen Walzen betrug 1,5m/min. Das Verdichten der grünen Mischung im Walzenspalt erfolgte kontinuierlich bei Raumtemperatur und das verdichtete Profil verlies den Walzenspalt vertikal von oben nach unten. Der Walzenspalt wurde auf 1,90mm eingestellt.
Das Ergebnis des Walz-Kompaktierens war ein verdichtetes endloses Profil aus einem Materialverbund aus grünem Kohlenstoff und dünnem metallischem Leiter mit einer Dicke von 2,10mm.
In einem dritten Ausführungsbeispiel wurden zwei gemäß dem ersten Ausführungsbeispiel kontinuierlich hergestellte, verdichtete Profile in ein Walzenpaar gegeben, dessen Walzenachsen in der vertikalen Ebene angeordnet waren, die Profile wurden also in der Horizontalen gefördert. Zwischen die beiden Profile aus grünem Kohlenstoff wurde eine Lage aus Kupfernetz gegeben. Das Walz-Kompaktieren erfolgte unter diesen Bedingungen:
   Die Walzen hatten jeweils einen Durchmesser von 200mm und die Mantelgeschwindigkeit der gegenläufigen Walzen betrug 2,0m/min. Die drei Materiallagen wurden vor dem Eintritt in den Walzenspalt innerhalb von einer Minute auf 80°C aufgeheizt. Die drei Lagen hatten vor dem Verdichten eine Gesamtdicke von 4,80mm und der Walzenspalt wurde auf 3,60mm eingestellt.
   Das Ergebnis des Walz-Kompaktierens war ein verdichteter endloser Formkörper aus einem Materialverbund aus grünem Kohlenstoff und dünnem metallischem Leiter mit einer Dicke von 3,75mm.

In einem vierten Ausführungsbeispiel wurden drei gemäß dem dritten Ausführungsbeispiel kontinuierlich hergestellte, verdichtete Profile aus dem Materialverbund aus grünem Kohlenstoff und dünnem metallischem Leiter in ein Walzenpaar gegeben, dessen Walzenachsen in der vertikalen Ebene angeordnet waren, die Profile wurden also in der Horizontalen gefördert. Das Walz-Kompaktieren erfolgte unter diesen Bedingungen:
Die Walzen hatten jeweils einen Durchmesser von 200mm und die Mantelgeschwindigkeit der gegenläufigen Walzen betrug 2,0m/min. Die drei Materiallagen wurden vor dem Eintritt in den Walzenspalt innerhalb von vier Minuten auf 80°C aufgeheizt. Die drei Lagen hatten vor dem Verdichten eine Gesamtdicke von 11,25mm und der Walzenspalt wurde auf 10,00mm eingestellt.
Das Ergebnis des Walz-Kompaktierens war ein verdichteter, endloser Formkörper aus einem Mate-rialverbund aus grünem Kohlenstoff und dünnem metallischem Leiter mit einer Dicke von 10,25mm.

Durch die folgende Figur wird die Erfindung beispielhaft weiter erläutert. Es zeigt:

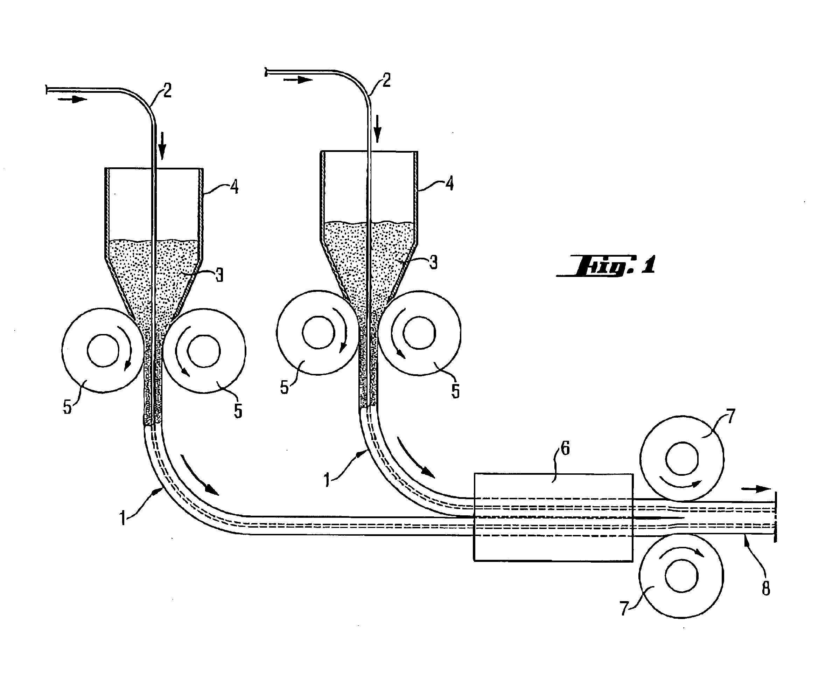

- Fig. 1: Schema einer Gesamtanlage zur kontinuierlichen Herstellung eines Formkörpers (8)

### Beschreibung der Figur:

Das Schema einer Gesamtanlage zur kontinuierlichen Herstellung eines Formkörpers (8) gibt eine Übersicht, wie aus verschiedenen Vorprodukten (2), (3) der Formkörper (8) aus grünem Kohlenstoff und dünnem metallischen Leiter entsteht. Exemplarisch wird die kontinuierliche Herstellung zweier - statt mehrerer - gleichartiger verdichteter Profile (1) eines Materialverbundes gezeigt. Für jeweils ein Profil (1) eines Materialverbundes gilt: In einen Fülltrichter (4) wird die rieselfähige grüne Mischung (3) gegeben. Mittels einer Verstelleinrichtung wird die aus dem Fülltrichter (4) ausfließende und in den Walzenspalt des Walzenpaares (5) eintretende Menge der grünen Mischung geregelt. Gleichzeitig wird eine Lage eines dünnen metallischen Leiters (2) mit in den Walzenspalt eingezogen. Diese Lage (2) tritt von oben in den mit der rieselfähigen grünen Mischung (3) gefüllten Fülltrichter (4) mit ein. Sie wird dabei so geführt, dass sie entweder auf beiden Seiten etwa in gleicher Stärke von der zunächst rieselfähigen, dann im Walzenspalt verdichteten grünen Mischung bedeckt ist oder die Lage (2) wird so geführt, dass sie nur einseitig von der zunächst rieselfähigen, dann im Walzenspalt verdichteten grünen Mischung bedeckt ist. Aus dem Walzenpaar (5) tritt kontinuierlich das verdichtete Profil (1) eines Materialverbundes - bestehend aus den Vorprodukten (2), (3) - hervor.
Die mindestens zwei gleichzeitig im Wesentlichen in vertikaler Richtung von oben nach unten entstehenden Profile (1) des Materialverbundes sind Dank ihres guten Zusammenhaltes ohne Weiteres zu handhaben und lassen sich deshalb um 90° umlenken. Die mindestens zwei Profile (1) werden dann im Wesentlichen horizontal gefördert und zusammengefasst einer Temperierkammer zur Vorwärmung (6) zugeführt. Bei Temperaturen von mindestens 20°C und höchstens 120°C werden sie mit einem weiteren Walzenpaar (7) zu einem Formkörper (8) verwalzt.

### Bezugszeichenliste

- 1: Verdichtetes, endloses Profil eines Materialverbundes aus den Vorprodukten (2), (3)
- 2: Dünner metallischer Leiter
- 3: Rieselfähige grüne Mischung
- 4: Fülltrichter mit Verstelleinrichtung für grüne Mischung
- 5: Walzenpaar zum Walz-Kompaktieren der Vorprodukte
- 6: Temperierkammer
- 7: Walzenpaar zum gemeinsamen Verdichten von mindestens zwei Profilen
- 8: Formkörper

## Patentansprüche

1. Verfahren zur kontinuierlichen Herstellung eines Materialverbundes und einer daraus herzustellenden Schleifleiste
* bestehend aus einer Matrix von gebranntem Kohlenstoff mit wärmebehandeltem Binder und aus lagenweise darin enthaltenen dünnen metallischen Leitern (2)
* mit einer Dichte von kleiner oder gleich 2,3g/cm³ und
* mit einem parallel zu den Lagen der dünnen metallischen Leiter gemessenen mittleren spezifischen elektrischen Widerstand von kleiner oder gleich 3µΩm
* für Schleifleisten zur gleitenden Stromabnahme zwecks Betrieb von Fahrzeugen mit Elektromotoren
* mittels der bekannten Verfahrensschritte
- Mischen der trockenen Kohlenstoffkomponenten und der Additive mit kohlenwasserstoffhaltigem Bindemittel
- Brennen des zunächst grünen Formkörpers unter dem Schutzgas Wasserstoff und
- Bearbeiten des so erhaltenen Materialverbundes zu Schleifleisten, die die dünnen metallischen Leiter in der gewünschten Orientierung enthalten,
**dadurch gekennzeichnet, dass**
nach dem Verfahrensschritt Mischen und vor dem Verfahrensschritt Brennen
mit einem Verfahrensschritt Walz-Kompaktieren ein verdichtetes Profil (1) eines Materialverbundes aus grünem Kohlenstoffmatezial und dünnem metallischen Leiter (2) kontinuierlich erzeugt wird.

2. Verfahren nach Anspruch 1 **dadurch gekennzeichnet, dass**
für das Walz-Kompaktieren eine rieselfähige grüne Mischung (3), bevorzugt als Körnung aus einer Sekundannahlung, eingesetzt wird.

3. Verfahren nach Anspruch 2 **dadurch gekennzeichnet, dass**
für das Walz-Kompaktieren eine rieselfähige grüne Mischung (3) mit 10 bis 50Gew.-% Bindemittel eingesetzt wird.

4. Verfahren nach den Ansprüchen 2 und 3 **dadurch gekennzeichnet, dass**
für das Walz-Kompaktieren aus der Gruppe der kohlenwasserstoffhaltigen Bindemittel Peche oder Kunstharze eingesetzt werden.

5. Verfahren nach den Ansprüchen 2 bis 4 **dadurch gekennzeichnet, dass**
für das Walz-Kompaktieren eine rieselfähige grüne Mischung (3) mit einer Kornverteilung von 10 µm bis 500 µm eingesetzt wird.

6. Verfahren nach Anspruch 1 **dadurch gekennzeichnet, dass**
für das Walz-Kompaktieren eine rieselfähige grüne Mischung (3) und darin eingebettet eine Lage aus dünnem metallischen Leiter (2) eingesetzt wird.

7. Verfahren nach Anspruch 6 **dadurch gekennzeichnet, dass**
die Lage aus dünnem metallischen Leiter (2) so beim Walz-Kompaktieren eingesetzt wird, dass sie auf beiden Seiten etwa in gleicher Stärke von der zunächst rieselfähigen, dann verdichteten grünen Mischung bedeckt ist.

8. Verfahren nach Anspruch 6 **dadurch gekennzeichnet, dass**
die Lage aus dünnem metallischen Leiter (2) so beim Walz-Kompaktieren eingesetzt wird, dass sie nur einseitig von der zunächst rieselfähigen, dann verdichteten grünen Mischung bedeckt ist.

9. Verfahren nach den Ansprüchen 6 bis 8 **dadurch gekennzeichnet, dass**
für das Walz-Kompaktieren als Lage aus dünnem metallischen Leiter (2) Drähte, Litzen oder Bänder mit Dicken der einzelnen Filamente von weniger als 0,4 mm eingesetzt werden.

10. Verfahren nach den Ansprüchen 6 bis 9 **dadurch gekennzeichnet, dass**
in der Lage des dünnen metallischen Leiters (2) Kupferlegierungen oder Kupfer für das Walz-Kompaktieren eingesetzt wird.

11. Verfahren nach den Ansprüchen 6 bis 10 **dadurch gekennzeichnet, dass**
in der Lage des dünnen metallischen Leiters (2) die Drähte, Litzen oder Bänder im Wesentlichen unidirektional einzeln oder scharweise, jeweils mit Abständen zueinander für das Walz-Kompaktieren eingesetzt werden.

12. Verfahren nach den Ansprüchen 6 bis 11 **dadurch gekennzeichnet, dass**
in der Lage des dünnen metallischen Leiters (2) die Drähte, Litzen oder Bänder im Wesentlichen multidirektional für das Walz-Kompaktieren eingesetzt werden.

13. Verfahren nach den Ansprüchen 6 bis 12 **dadurch gekennzeichnet, dass**
in der Lage des dünnen metallischen Leiters (2) solche textilen Formen des Leiters eingesetzt werden, dass mindestens 40% der Fläche dieser Lage aus der verdichteten grünen Mischung bestehen.

14. Verfahren nach einem oder mehreren der Ansprüche 1 bis 13 **dadurch gekennzeichnet, dass**
das Walz-Kompaktieren der Vorprodukte zwischen den Walzen von mindestens einem Walzenpaar (5) erfolgt, welches einen definiert eingestellten Walzenspalt aufweist und aus zwei mit gleicher aber gegenläufiger Mantelgeschwindigkeit laufenden Walzen besteht.

15. Verfahren nach Anspruch 14 **dadurch gekennzeichnet, dass**
die Vorprodukte und das daraus verdichtete Profil (1) des grünen Kohlenstoffmaterials oder des Materialverbundes kontinuierlich im Wesentlichen vertikal von oben nach unten gefördert werden.

16. Verfahren nach Anspruch 14 **dadurch gekennzeichnet, dass**
zwei oder mehrere verdichtete, endlose Profile (1) mit oder ohne Lagen dünner metallischer Leiter (2) übereinander gelegt bei Temperaturen von 20 bis 120°C im Wesentlichen horizontal im Walz-Kompaktieren verwalzt werden.

17. Verfahren nach einem oder mehreren der Ansprüche 14 bis 16 **dadurch gekennzeichnet, dass**
in einer Gesamtanlage kontinuierlich mindestens zwei verdichtete Profile (1) zunächst im Wesentlichen in vertikaler Richtung von oben nach unten erzeugt und gefördert werden und nach Umlenken um 90° sowie nach einer Vorwärmung in einer Temperierkammer (6) zusammengefasst und im Wesentlichen horizontal mit Hilfe eines Walzenpaares (7) zu einem Formkörper verwalzt werden.

18. Materialverbund nach einem oder mehreren der Ansprüche 1 bis 17 **dadurch**
**gekennzeichnet, dass**
der Materialverbund weniger als 5Vol.-% Metalle enthält.
